(19) Europäisches Patentamt
European Patent Office
Office européen des brevets

(11) **EP 3 241 610 A1**

(12) **EUROPÄISCHE PATENTANMELDUNG**

(43) Veröffentlichungstag:
**08.11.2017 Patentblatt 2017/45**

(51) Int Cl.:
**B01F 15/00** (2006.01)     **B01F 13/10** (2006.01)
**B01F 15/04** (2006.01)     **B28C 7/00** (2006.01)
**G05D 11/00** (2006.01)

(21) Anmeldenummer: **17168628.0**

(22) Anmeldetag: **28.04.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **02.05.2016 DE 102016108104**

(71) Anmelder: **Wöhrl, Thomas**
**74629 Pfedelbach (DE)**

(72) Erfinder: **Wöhrl, Thomas**
**74629 Pfedelbach (DE)**

(74) Vertreter: **Patentanwaltskanzlei Vièl & Wieske
PartGmbB
Feldmannstraße 110
66119 Saarbrücken (DE)**

(54) **VERFAHREN ZUR BESTIMMUNG DES RELATIVEN ANTEILS VON FRAKTIONEN VON SCHÜTTGUT IN EINER MISCHUNG, BESTEHEND AUS ANTEILEN VERSCHIEDENER FRAKTIONEN ZUR ERZIELUNG EINES VORGEGEBENEN GESAMTMISCHUNGSVERHÄLTNISSES HINSICHTLICH DER KORNGRÖ?EN DES SCHÜTTGUTS**

(57) Die vorliegende Erfindung betrifft ein Verfahren zur Bestimmung des relativen Anteils von Fraktionen von Schüttgut in einer Mischung, bestehend aus Anteilen verschiedener Fraktionen zur Erzielung eines vorgegebenen Gesamtmischungsverhältnisses hinsichtlich der Korngrößen des Schüttguts, wobei die Fraktionen hinsichtlich von Sollwerten der Korngröße bzw. hinsichtlich von Sollwerten der Korngrößen in den Fraktionen aufgeteilt sind und wobei die Anteile der einzelnen Fraktionen derart festgelegt werden, dass das sich einstellende Mischungsverhältnis der Korngrößen im Schüttgut optimiert ist im Hinblick auf eine Annäherung an das vorgegebene Mischungsverhältnis. Nach der vorliegenden Erindung wird die Istverteilung der Korngrößen in den Fraktionen ermittelt und die Optimierung auf Basis der ermittelten Istverteilungen in den Fraktionen durchgeführt.

FIG 1

EP 3 241 610 A1

## Beschreibung

Die vorliegende Erfindung betrifft ein Verfahren zur Bestimmung des relativen Anteils von Fraktionen von Schüttgut in einer Mischung, bestehend aus Anteilen verschiedener Fraktionen zur Erzielung eines vorgegebenen Gesamtmischungsverhältnisses hinsichtlich der Korngrößen des Schüttguts nach dem Oberbegriff des Anspruchs 1.

Es ist bekannt, Schüttgüter derselben Art hinsichtlich unterschiedlicher Korngrößen zu trennen. Dabei kann es sich beispielsweise um Sande oder Quarzsande handeln. Diese Unterteilung wird als Klassieren bezeichnet. Die einzelnen Fraktionen enthalten Körnungen einer bestimmten Soll-Korngröße für die jeweilige Fraktion. Da keine exakte Trennung (Trennschnitt) möglich ist, besteht in einer Fraktion eine bestimmte Kornverteilung. Das bedeutet, dass in einer Fraktion nicht nur Schüttgut enthalten ist mit einer Korngröße, die exakt der Soll-Korngröße entspricht. Es ist auch Schüttgut enthalten mit einer Korngröße, die von der Soll-Korngröße nach unten bzw. nach oben abweicht. Im Normalfall wird der relative Anteil von Schüttgut mit einer Korngröße, die von der Soll-Korngröße abweicht mit zunehmender Differenz der Korngröße von der Soll-Korngröße geringer und verschwindet (zumindest nahezu) vollständig. Die Verteilung der Anteile von Schüttgut hinsichtlich der Korngrößen in einer Fraktion entspricht beispielsweise dem Verlauf einer Glockenkurve um die Soll-Korngröße herum. Die Verteilung kann anstelle der Glockenkurve auch andere Verläufe aufweisen. Beispielsweise kann der relative Anteil von Schüttgut hinsichtlich der Korngröße mit zunehmender Differenz zur Soll-Korngröße exponentiell abnehmen.

Somit sind die Fraktionen hinsichtlich von Sollwerten der Korngröße bzw. hinsichtlich von einer Verteilung hinsichtlich der Korngrößen in den Fraktionen aufgeteilt. Die Anteile der einzelnen Fraktionen in einer Mischung von Schüttgut werden derart festgelegt, dass das sich einstellende Mischungsverhältnis der Korngrößen im Schüttgut optimiert ist im Hinblick auf eine Annäherung an das vorgegebene Mischungsverhältnis. Dies wird auch als Rezept bezeichnet.

Diese Optimierung kann erfolgen, indem aus der Verteilung der Korngrößen in den Fraktionen und aus dem relativen Anteil der einzelnen Fraktionen in der Mischung eine "Gesamtverteilung" ermittelt wird für die Korngrößen in der Mischung. Die Optimierung erfolgt derart, dass die Abweichungen der Gesamtverteilung der Korngrößen in der Mischung bezogen auf das vorgegebene Mischungsverhältnis minimiert werden. Diese Abweichungen können beispielsweise mittels statistischer Methoden ermittelt werden nach der Methode der kleinsten Fehlerquadrate. Ebenso kann auch die Fläche ermittelt werden, die sich ergibt zwischen dem Graphen der Gesamtverteilung der Korngrößen im Mischungsverhältnis und dem Graphen der Soll-Verteilung im vorgegebenen Mischungsverhältnis. Es geht dann darum, die Fläche zu minimieren. Ggf. können die einzelnen Flächenteile zwischen den Kurven auch betragsmäßig bewertet werden.

Ein derartiges Verfahren nach dem Oberbegriff des Anspruchs 1 ist aus der DE 101 06 323 A1 bekannt. Dort ist ein System beschrieben, das einen Server aufweist, der in einer Schüttgutabgabeeinheit aufgestellt ist. In dem Server sind Parameter von Fraktionen des Schüttgutes gespeichert. Bestellungen von Schüttgut werden über den Server abgewickelt. Der Server überprüft bei einer eingehenden Bestellung (ggf. noch unter Berücksichtigung einer gewünschten Abholzeit), ob ein entsprechendes Gemisch eines Schüttgutes bereitgestellt werden kann. Nach einer Bestätigung der Bestellung wird das Schüttgut zur gewünschten Zeit bereitgestellt. Dabei kann gegebenenfalls noch die vorhandene Menge der einzelnen Fraktionen berücksichtigt werden, so dass entsprechende Fraktionen mit einer Bandbreite der Korngrößen in dieser Fraktion nachproduziert werden können, wenn ein unterer Grenzwert des Vorrates erreicht wird.

Aus der DE 20 2004 015 916 U1 sowie der DE 10 2012 106 132 A1 ist es bekannt, Korngrößenverteilungen in Gemischen von Schüttgütern zu messen.

Der vorliegenden Erfindung liegt die Aufgabe zu Grunde, die Einstellung des Mischungsverhältnisses besser an die Soll-Verteilung des vorgegebenen Mischungsverhältnisses anzupassen.

Dazu wird die Istverteilung der Korngrößen in den Fraktionen ermittelt. Die Optimierung wird auf Basis der ermittelten Istverteilungen in den Fraktionen durchgeführt.

Dies erweist sich als vorteilhaft, weil sich zwar grundsätzlich eine Verteilung der Korngrößen in den einzelnen Fraktionen zu Grunde legen lässt. Es hat sich gezeigt, dass sich die Genauigkeit bei der Einstellung der Verteilung der Korngrößen in der Gesamtverteilung in der Mischung verbessern lässt, wenn bei den einzelnen Fraktionen nicht lediglich eine angenommene (d.h. erwartete) Verteilung zu Grunde gelegt wird, sondern wenn nach der Trennung (Klassierung) des Schüttgutes in die einzelnen Fraktionen bezüglich der einzelnen Fraktionen ermittelt wird, welche Verteilung der Korngrößen (Trennschnitt) sich tatsächlich eingestellt hat. Diese sich einstellende Istverteilung kann für dieselbe Fraktion bei den verschiedenen Trennvorgängen unterschiedlich ausfallen.

Insofern erweist es sich als vorteilhaft, die tatsächliche Istverteilung der Korngrößen in den einzelnen Fraktionen zu untersuchen und diese Istverteilung bei der Bestimmung der relativen Anteile der Fraktionen zur Einstellung eines bestimmten Mischungsverhältnisses zu Grunde zu legen.

Diese Istverteilung kann beispielsweise ermittelt werden, indem eine bestimmte Menge der einzelnen Fraktionen entnommen wird und diese Menge hinsichtlich der Verteilung der Korngrößen untersucht wird. Dies dient auch dem Qualitätsnachweis zur Dokumentation der Randbedingungen bei der Herstellung der Mischungen. Dies erfolgt durch Probeabsiebungen im Labor.

Die Vorbehandlung einer entnommenen (Teil-) Menge aus der Fraktion ist ohne Probleme möglich im Vergleich zu einer entsprechenden Behandlung des gesamten Schüttgutes, um damit bei der Trennung in die Fraktionen in vollem Umfang definierte Bedingungen zu erhalten.

Bei der Ausgestaltung des Verfahrens nach Anspruch 2 wird die Optimierung durchgeführt, indem zu den ermittelten Istverteilungen der einzelnen Fraktionen jeweils die Parameter einer Näherungsgleichung bestimmt werden, so dass diese Näherungsgleichungen der ermittelten Istverteilung in der jeweiligen Fraktion optimiert angenähert sind.

Anspruch 2 betrifft eine Vorgehensweise, bei der zu Vereinfachung der weiteren Handhabungen Gleichungen bestimmt werden, anhand derer die sich ergebenden Mengen von Schüttgut einer bestimmten Korngröße in einer Mischung bestimmt werden können.

Die Näherungsgleichung kann beispielsweise die oben erwähnte Glockenkurve sein. Es ist auch möglich, eine Näherungsgleichung zu bestimmen, indem für eine Fraktion unterschiedliche Bereiche von Korngrößen unterteilt werden in dem Sinne, dass zu den einzelnen Bereichen separate Näherungsgleichungen bestimmt werden. Diese separaten Näherungsgleichungen können identische Struktur haben, so dass hinsichtlich der einzelnen Bereiche der Korngrößen für eine Fraktion lediglich unterschiedliche Parameter bestimmt werden.

Es ist auch möglich, für die einzelnen Bereiche der Korngröße Näherungsgleichungen zu definieren, die in ihrer Struktur unterschiedlich sind.

Es ist auch möglich, die Näherungsgleichungen in den Grenzen der einzelnen Bereiche so aneinander anzufitten, dass die Übergänge der Näherungsgleichungen homogenisiert werden. Dies gilt sowohl, wenn die Näherungsgleichungen in benachbarten identische Struktur aufweisen als auch, wenn diese Näherungsgleichungen unterschiedliche Struktur aufweisen.

Die Gleichungen weisen identische Struktur auf, wenn für zwei Bereiche jeweils eine Funktion:

$$y=f(x)$$

festgelegt wird. Lediglich die Parameter der Gleichung f(x) werden für die beiden Bereich unterschiedlich ermittelt. Die Gleichungen haben unterschiedliche Struktur, wenn für einen Bereich die Funktion:

$$y=f(x)$$

angesetzt wird und für einen benachbarten Bereich eine andere Funktion:

$$y=g(x)$$

Die Funktion f(x) kann beispielsweise eine Parabel sein und die Funktion g(x) eine Exponentialfunktion. In diesem Beispiel haben die beiden Funktionen (Gleichungen) unterschiedliche Struktur.

Bei der Ausgestaltung nach Anspruch 3 ist es möglich, für die weitere Bearbeitung die ermittelten diskreten Werten für die einzelnen Bereiche der Korngrößen zu verwenden. Ebenso kann auch in Rückbeziehung auf Anspruch 2 eine Näherungsgleichung so bestimmt werden, dass diese optimiert an die Werte angenähert ist, die sich aus den Balken des Balkendiagramms ergeben.

Bei der Ausgestaltung nach Anspruch 3 werden die Anteile der Fraktionen so gewichtet, dass die Summe der sich ergebenden Funktionswerte der entsprechend den einzelnen Gewichtungen der jeweiligen Fraktion gewichteten Näherungsgleichungen optimiert an das vorgegebene Mischungsverhältnis angepasst ist.

Damit wird unter Verwendung der nach Anspruch 2 ermittelten Näherungsgleichungen die Optimierung der Anteile der Fraktionen in der Mischung unter Verwendung dieser Näherungsgleichungen durchgeführt, um die Optimierung zu erreichen.

Anspruch 4 betrifft eine Vorgehensweise, bei der zu den einzelnen Fraktionen jeweils ein durch die ermittelte Istverteilung gewichteter Mittelwert der Korngrößen bestimmt wird. Dieser gewichtete Mittelwert wird mit jeweils einem gewichteten Sollwert verglichen, der zu den einzelnen Fraktionen jeweils als gewichteter gemittelter Sollwert bestimmt wird. Dabei erfolgt die gewichtete Mittelung dieses Sollwertes auf Grund einer Sollverteilung der Korngrößen in der jeweiligen Fraktion.

Bei der Vorgehensweise nach Anspruch 4 wird somit eine Verschiebung der tatsächlichen Verteilung der Korngrößen in einer Fraktion gegenüber einer Soll-Verteilung der Korngrößen in dieser Fraktion ermittelt. Dies ist numerisch einfacher durchführbar als die Bestimmung der Parameter von Näherungsgleichungen.

Die Vorgehensweise nach Anspruch 4 lässt sich nicht lediglich alternativ zur Bestimmung der Parameter der Näherungsgleichungen einsetzen sondern auch ergänzend. Ausgehend von einem relativen Anteil der einzelnen Fraktionen entsprechend einer Soll-Verteilung der Korngrößen in den Fraktionen in einem vorgegebenen Mischungsverhältnis lässt sich eine Änderung dieser relativen Anteile abhängig von der vorgenannten Verschiebung der gewichteten Mittelwerte in den Fraktionen ermitteln.

Abhängig von dieser Verschiebung kann ermittelt werden, wie die relativen Anteile der Fraktionen in der Mischung geändert werden können, um eine bessere Anpassung der Gesamtverteilung der Korngrößen in der Mischung an das vorgegebene Gesamtmischungsverhältnis zu erreichen.

Verschiebt sich beispielsweise der gewichtete Mittelwert in der Fraktion mit den kleinsten Korngrößen nach oben, kann es sinnvoll sein, in der Gesamtmischung den relativen Anteil dieser Fraktion zu erhöhen. Entsprechend würden dann die relativen Anteile anderer Fraktionen reduziert. Dies würde insbesondere den relativen Anteil der Fraktion betreffen, die sich hinsichtlich der Korngrößen unmittelbar an die Fraktion mit den kleinsten Korngrößen anschließt.

Bei dem Verfahren nach Anspruch 5 erfolgt der Vergleich des gewichteten Mittelwertes mit dem gewichteten gemittelten Sollwert, indem die prozentuale Abweichung des gewichteten Mittelwertes von dem gewichteten gemittelten Sollwert bestimmt wird.

Abhängig von dieser prozentualen Abweichung kann beispielsweise der relative Anteil der jeweiligen Fraktion in der Mischung angepasst werden.

Bei der Ausgestaltung nach Anspruch 6 werden die Korngrößen in Bereiche unterteilt. Weiterhin wird der relative Anteil ermittelt, mit dem den einzelnen Bereichen zuzuordnende Korngrößen in den einzelnen Fraktionen enthalten sind. Auf Grundlage des sich ergebenden Balkendiagramms wird eine Verteilung der Korngrößen in einem Mischungsverhältnis mit den Anteilen der einzelnen Fraktionen ermittelt.

Bei der Ausgestaltung nach Anspruch 6 müssen vorteilhaft keine Parameter einer Näherungsgleichung bestimmt werden. Bei dieser Vorgehensweise kann vorteilhaft berücksichtigt werden, dass auch im Labor bei den Probeabsiebungen nur eine Untersuchung mit Sieben möglich ist, die bestimmte diskrete Durchmesser haben. Die Unterteilung dieser diskreten Durchmesser kann vorteilhaft der Größe der einzelnen Bereiche entsprechen.

Bei der Ausgestaltung nach Anspruch 6 werden für die weitere Bearbeitung die ermittelten diskreten Werten für die einzelnen Bereiche (Balken) der Korngrößen verwendet.

Ebenso kann auch in Rückbeziehung auf Anspruch 2 eine Näherungsgleichung so bestimmt werden, dass diese optimiert an die Werte angenähert ist, die sich aus den Balken des Balkendiagramms ergeben.

Bei dem Verfahren nach Anspruch 7 wird die Istverteilung der Korngrößen in einer Fraktion ermittelt, wenn der Vorratsbehälter der jeweiligen Fraktion beschickt worden ist.

Dies erweist sich insofern als vorteilhaft, weil gerade beim Beschicken des Vorratsbehälters Schüttgut nachgefüllt wird, das aus einem anderen Teil des Vorkommens (Rohstoff) kommt als das bereits vorhandene Schüttgut / Material in dem Vorratsbehälter. Daraus kann eine Änderung der Verteilung der Korngrößen in dieser Fraktion resultieren. Deswegen erweist es sich als vorteilhaft, die Istverteilung dann zu ermitteln, wenn ein Nachfüllvorgang erfolgt ist.

Bei dem Verfahren nach Anspruch 8 wird die Istverteilung der Korngrößen in den Fraktionen in bestimmten Zeitintervallen ermittelt.

Diese Ermittlung der Istverteilung erfolgt im Labor beispielsweise in stündlichen Zeitintervallen.

Vorteilhaft kann damit die Istverteilung in den Fraktionen auch zwischen Beschickungsvorgängen ermittelt werden.

Es hat sich gezeigt, dass sich in gewissem Maße eine Entmischung in den einzelnen Fraktionen einstellt. Wird eine Fraktion beispielsweise aufgehäuft gelagert, zeigt sich, dass im Außenbereich überwiegend größere Körner nach unten abrutschen. Damit stellt sich im äußeren Bereich mit zunehmender Höhe ein größerer Anteil von kleinen Körnern ein als im äußeren Bereich bei niedriger Höhe. Befindet sich unter einem solchen Vorrat von Schüttgut eine Ausgabeöffnung, die im Wesentlichen mittig angeordnet ist, zeigt sich, dass beim Öffnung der Ausgabeöffnung sich in der Mitte ein negativer Trichter einstellt. Auch im Randbereich dieses Trichters rutscht wieder das Schüttgut mit der größeren Körnung stärker nach unten als das Schüttgut mit kleinerer Körnung. Wenn dieser Effekt zum Tragen kommt, besteht im Bereich der Ausgabeöffnung ein höherer Anteil von Schüttgut mit größerer Körnung als restlichen Volumen diese Fraktion.

Im Hinblick auf den vorstehenden Effekt kann es auch sinnvoll sein, die Istverteilung einer Fraktion zu untersuchen, indem die zu untersuchende Menge an der Ausgabeöffnung der Fraktion für die Herstellung von Mischungen entnommen wird. Dies ist im Anspruch 10 ausgeführt.

Entsprechend Anspruch 9 ist es ebenfalls sinnvoll, die Istverteilung in Intervallen zu kontrollieren, die von der entnommenen Menge des Schüttguts seit der letzten Ermittlung der Istverteilung abhängen.

Damit können vorteilhaft die beschriebenen Effekte des Nachrutschens von Schüttgut berücksichtigt werden.

Gegebenenfalls kann das Verfahren nach Anspruch 8 auch mit dem Verfahren nach Anspruch 7 kombiniert werden. Die Istverteilung wird dann in jedem Fall beispielsweise stündlich ermittelt und zusätzlich, wenn eine Beschickung erfolgt ist. Diese Kombination kann weiterhin unter Berücksichtigung des Verfahrens nach Anspruch 9 erfolgen, wobei die Istverteilung zusätzlich auch dann ermittelt werden kann, wenn seit der letzten Ermittlung des Istverteilung eine bestimmte Menge an Schüttgut dieser Fraktion entnommen wurde.

Es kann vorkommen, dass die Mischung der Korngrößen in Teilvolumen der Fraktionen unterschiedlich ist, weil eine Entmischung in den einzelnen Silos / Fraktionen in einem bestimmten Maß erfolgen kann.

Beispielsweise kann der Effekt auftreten, dass bei einer Entnahme von Schüttgut durch Öffnen eines Schiebers am unteren Ende des Vorratsbehälters beim Nachrutschen des Schüttguts in dem Vorratsbehälter die Körner mit kleineren Korngrößen schneller nach unten rutschen als die Körner mit größeren Korngrößen.

Um eine Mischung mit den ermittelten relativen Anteilen der einzelnen Fraktionen herzustellen ist es bekannt, diese Mischung abhängig von dem Volumen der einzelnen Fraktionen herzustellen. Hierzu kann beispielsweise ein Schieber an einem unteren Ende eines Vorratsbehälters der jeweiligen Fraktion für eine bestimmte Zeitdauer geöffnet werden. Die Zeitdauern der Öffnung der Vorratsbehälter der einzelnen Fraktionen relativ zueinander entsprechen dabei dem ermittelten relativen Anteil der jeweiligen Fraktion.

Ebenso können die ermittelten relativen Anteile eingestellt werden, indem die entnommenen Mengen der einzelnen Fraktionen verwogen werden.

Ein Ausführungsbeispiel der Erfindung ist in der Zeichnung dargestellt. Es zeigt dabei:

Fig. 1: ein erstes Beispiel für die Verteilung von Korngrößen in einer Fraktion,

Fig. 2: ein weiteres Beispiel für die Verteilung von Korngrößen in einer Fraktion,

Fig. 3: ein Beispiel für die Zusammensetzung einer Mischung aus mehreren Fraktionen und

Fig. 4: einen Vorratsbehälter für eine Fraktion eines Schüttguts.

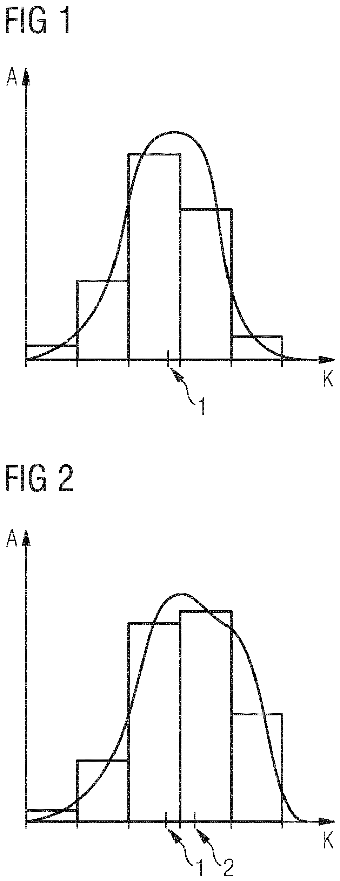

Figur 1 zeigt ein erstes Beispiel für die Verteilung von Korngrößen in einer Fraktion. Es ist zu sehen, dass die Verteilung eine Häufung bei einer bestimmten Korngröße (Bezugsziffer 1) hat. Mit zunehmender Differenz der Korngrößen von dieser bestimmten Korngröße nimmt der Anteil der entsprechenden Körner in der Fraktion ab.

Im Ausführungsbeispiel der Figur 1 ist die Verteilung der Korngrößen um die bestimmte Korngröße herum gleichmäßig.

Figur 1 zeigt die Verteilung der Korngrößen sowohl in einem Balkendiagramm sowie auch mit einer Näherungsgleichung.

Bei dem Balkendiagramm sind die Anteile der Körner zu sehen, deren Korngrößen in dem jeweiligen Teilbereich der Korngrößen K liegen, der durch diesen Balken repräsentiert wird.

Die Näherungsgleich stellt die Verteilung mit einer Funktion dar.

Figur 2 zeigt ein weiteres Beispiel für die Verteilung von Korngrößen in einer Fraktion. Auch hier hat die Verteilung eine Häufung bei einer bestimmten Korngröße. Ebenso nimmt der Anteil von Körnern mit zunehmender Differenz der Korngrößen von dieser bestimmten Korngröße ab.

Im Unterschied zu dem Beispiel nach Figur 1 ist die Verteilung der Korngrößen um die bestimmte Korngröße (Bezugsziffer 1) herum nicht gleichmäßig. Der Anteil von Körnern mit einer Korngröße, die größer ist al die bestimmte Korngröße nimmt in dem Beispiel der Figur 2 langsamer ab als in dem Beispiel der Figur 1.

Der gewichtete Mittelwert der Korngröße in einer Fraktion lässt sich so ermitteln, dass der Flächenanteil unter der Kurve der Verteilung der Anteile A über der Korngröße K links (d.h. bei Werten mit kleineren Korngrößen als dies dem gewichteten Mittelwert entspricht) von dem gewichteten Mittelwert gleich sein muss zu dem Flächenanteil unter der Kurve der Verteilung der Anteile A über der Korngröße K rechts (d.h. bei Werten mit größeren Korngrößen als dies dem gewichteten Mittelwert entspricht) von dem gewichteten Mittelwert.

Bei einer symmetrischen Kurve um den Wert der Korngröße mit der Bezugsziffer 1, entspricht dieser Wert der Korngröße gerade dem gewichteten Mittelwert.

Bei der Darstellung der Figur 2 ist dieser gewichtete Mittelwert hin zu einem Wert einer größeren Korngröße verschoben, weil der Anteil der Körner mit größeren Korngrößen langsamer abnimmt. Der gewichtete Mittelwert ist in dem Beispiel der Figur 2 mit der Bezugsziffer 2 bezeichnet.

Anstelle dieser gewichteten Mittelwerte lassen sich die ermittelten Verteilungen auch durch Gleichungen annähern, zu denen die Parameter so bestimmt werden, dass diese Gleichungen dem ermittelten Verlauf der Verteilung möglichst gut entsprechen. Dies kann beispielsweise mit einer Parameteridentifikation erfolgen, die methodisch aus der Regelungstechnik bekannt ist.

Figur 2 zeigt vergleichbar zur Darstellung der Figur 1 ein Balkendiagramm hinsichtlich unterschiedlicher Teilbereiche der Korngrößen sowie eine Näherungsgleichung für die Verteilung nach Figur 2.

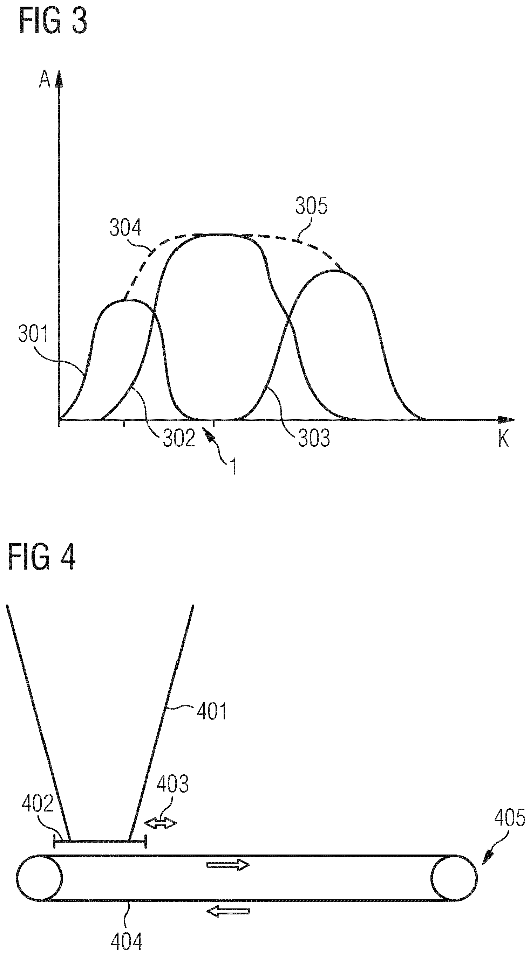

Figur 3 zeigt die Darstellung einer Zusammensetzung einer Mischung aus den Anteilen A mehrerer Fraktionen. Zu den einzelnen Fraktionen sind die Verteilungskurven 301, 302 und 303 eingetragen.

Die Kurve der Gesamtverteilung in der Mischung ergibt sich bei kleinen Korngrößen allein aus der Kurve 301.

Die Kurve der Gesamtverteilung steigt gegenüber dieser Kurve weiter an, wenn entsprechend der Verteilung in der Fraktion mit der Kurve 302 Mengen von Körnern entsprechender Korngrößen hinzukommen. Dieser Verlauf ist durch die strichlinierte Kurve 304 dargestellt.

Bei weiter zunehmenden Korngrößen geht diese Kurve über in die Kurve 302. Dies liegt daran, dass die Fraktionen mit den kleinen und den großen Korngrößen in diesem Bereich praktisch keine Anteile haben.

Wenn aus der Fraktion mit der Kurve 303 die Anteile der Körner mit entsprechenden Korngrößen ansteigt, ergibt sich die Gesamtverteilung im weiteren Verlauf durch die strichliniert Kurve 305.

Bei großen Korngrößen K wird die Gesamtverteilung allein durch die Verteilung der Fraktion mit der Kurve 303 bestimmt.

Entsprechend dem relativen Anteil der einzelnen Fraktionen werden die Kurven 301, 302 und 303 gestreckt bzw. gestaucht in Richtung der Achse A.

Durch eine Variation der relativen Anteile der Fraktionen lässt sich der Kurvenverlauf der Gesamtverteilung beeinflussen.

Dies erfolgt bei der vorliegenden Erfindung abhängig von der ermittelten Istverteilung der Korngrößen in den Fraktionen.

Entsprechend der Darstellung der Figur 4 weist ein Vorratsbehälter 401 an seinem unteren Ende ein Austragungsorgan 402 auf, das entsprechend dem Pfeil 403 geöffnet und geschlossen werden kann. Das Austragungsorgan kann beispielsweise ein Schieber oder auch eine Förderschnecke sein.

Weiterhin ist ein Förderband 404 zu sehen, durch das das entnommene Schüttgut zu einem Ende 405 des Förderbandes 404 gefördert wird. Von dort wird dieses Schüttgut einer Mischung zugeführt, der auch Anteile von anderen Fraktionen zugeführt werden.

Die Messung der entnommenen Menge von Schüttgut aus dem Vorratsbehälter 401 kann gravimetrisch erfolgen, beispielsweise durch eine in das Förderband 404 integrierte Bandwaage. Alternativ kann die Messung der entnommenen Menge von Schüttgut aus dem Vorratsbehälter 401 auch volumetrisch erfolgen. Eine solche volumetrische Messung kann beispielsweise durch eine gezielte Einstellung des Öffnungsquerschnitts am Ausgabeende des Vorratsbehälters 401 erfolgen.

Vorteilhaft wird die Menge des zu untersuchenden Schüttguts der Fraktion in dem Vorratsbehälter 401 ebenfalls über das Austragungsorgan 402 entnommen und nicht - beispielsweise - von oben aus dem Vorratsbehälter abgeschöpft.

**Patentansprüche**

1. Verfahren zur Bestimmung des relativen Anteils von Fraktionen von Schüttgut in einer Mischung, bestehend aus Anteilen verschiedener Fraktionen zur Erzielung eines vorgegebenen Gesamtmischungsverhältnisses hinsichtlich der Korngrößen des Schüttguts, wobei die Fraktionen hinsichtlich von Sollwerten der Korngröße bzw. hinsichtlich von Sollwerten der Korngrößen in den Fraktionen aufgeteilt sind und wobei die Anteile der einzelnen Fraktionen derart festgelegt werden, dass das sich einstellende Mischungsverhältnis der Korngrößen im Schüttgut optimiert ist im Hinblick auf eine Annäherung an das vorgegebene Mischungsverhältnis, **dadurch gekennzeichnet, dass** die Istverteilung der Korngrößen in den Fraktionen ermittelt wird und dass die Optimierung auf Basis der ermittelten Istverteilungen in den Fraktionen durchgeführt wird.

2. Verfahren nach Anspruch 1, **dadurch gekennzeichnet, dass** die Optimierung durchgeführt wird, indem zu den ermittelten Istverteilungen der einzelnen Fraktionen jeweils die Parameter einer Näherungsgleichung bestimmt werden, so dass diese Näherungsgleichungen der ermittelten Istverteilung in der jeweiligen Fraktion optimiert angenähert sind.

3. Verfahren nach Anspruch 2,

**dadurch gekennzeichnet, dass** die Anteile der Fraktionen so gewichtet werden, dass die Summe der sich ergebenden Funktionswerte der entsprechend den einzelnen Gewichtungen der jeweiligen Fraktion gewichteten Näherungsgleichungen optimiert an das vorgegebene Mischungsverhältnis angepasst ist.

4. Verfahren nach einem der Ansprüche 1 bis 3, **dadurch gekennzeichnet, dass** zu den einzelnen Fraktionen jeweils ein durch die ermittelte Istverteilung gewichteter Mittelwert der Korngrößen bestimmt wird und dass dieser gewichtete Mittelwert mit jeweils einem gewichteten Sollwert verglichen wird, der zu den einzelnen Fraktionen jeweils als gewichteter gemittelter Sollwert bestimmt wird, wobei die gewichtete Mittelung dieses Sollwertes auf Grund einer Sollverteilung der Korngrößen in der jeweiligen Fraktion erfolgt.

5. Verfahren nach Anspruch 4, **dadurch gekennzeichnet, dass** der Vergleich des gewichteten Mittelwertes mit dem gewichteten gemittelten Sollwert erfolgt, indem die prozentuale Abweichung des gewichteten Mittelwertes von dem gewichteten gemittelten Sollwert bestimmt wird.

6. Verfahren nach einem der vorhergehenden Ansprüche, **dadurch gekennzeichnet, dass** die Korngrößen in Bereiche unterteilt werden, dass der relative Anteil ermittelt wird, mit dem den einzelnen Bereichen zuzuordnende Korngrößen in den einzelnen Fraktionen enthalten sind und dass auf Grundlage des sich ergebenden Balkendiagramms eine Verteilung der Korngrößen in einem Mischungsverhältnis mit den Anteilen der einzelnen Fraktionen ermittelt wird.

7. Verfahren nach einem der Ansprüche 1 bis 6, **dadurch gekennzeichnet, dass** die Istverteilung der Korngrößen in einer Fraktion ermittelt wird, wenn der Vorratsbehälter der jeweiligen Fraktion nachgefüllt worden ist.

8. Verfahren nach einem der Ansprüche 1 bis 7, **dadurch gekennzeichnet, dass** die Istverteilung der Korngrößen in den Fraktionen in bestimmten Zeitintervallen ermittelt wird.

9. Verfahren nach einem der Ansprüche 1 bis 8, **dadurch gekennzeichnet, dass** die Istverteilung der Korngrößen in den Fraktionen in Intervallen ermittelt wird, die abhängen von der Menge an Schüttgut der jeweiligen Fraktion, die seit der letzten Ermittlung der Istverteilung entnommen wurde.

10. Verfahren nach einem der Ansprüche 1 bis 9, **dadurch gekennzeichnet, dass** die zu untersuchende Menge an Schüttgut der jeweiligen Fraktion an der Stelle entnommen wird, an der auch das Schüttgut dieser Fraktion entnommen wird, das zur Herstellung einer Mischung dieses Schüttguts verwendet wird.

FIG 1

FIG 2

FIG 3

FIG 4

Europäisches
Patentamt

European
Patent Office

Office européen
des brevets

# EUROPÄISCHER RECHERCHENBERICHT

Nummer der Anmeldung

EP 17 16 8628

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | NL 1 000 091 C2 (DEKKER ZANDBAGGERBEDRIJF B V [NL]) 8. Oktober 1996 (1996-10-08) <br> * Zusammenfassung * <br> * Abbildungen 1,2 * <br> * Seite 2, Zeile 16 - Zeile 28 * <br> * Seite 3, Zeile 16 - Seite 8, Zeile 31 * <br> ----- | 1-10 | INV. <br> B01F15/00 <br> B01F13/10 <br> B01F15/04 <br> B28C7/00 <br> G05D11/00 |
| X | JP S63 166424 A (DAIYU KENSETSU KK) 9. Juli 1988 (1988-07-09) <br> * Zusammenfassung * <br> * Abbildung 1 * <br> ----- | 1-10 | |
| A | EP 0 319 070 A1 (GRINT & ZANDEXPL MIJ VH SMALS [NL]) 7. Juni 1989 (1989-06-07) <br> * Zusammenfassung * <br> * Abbildungen 2,3,9 * <br> * Spalte 2, Zeile 13 - Spalte 3, Zeile 38 * <br> * Spalte 4, Zeile 40 - Spalte 5, Zeile 9 * <br> * Spalte 5, Zeile 43 - Zeile 54 * <br> ----- | 1-10 | |
| A,D | DE 101 06 323 A1 (WOEHRL THOMAS [DE]) 29. August 2002 (2002-08-29) <br> * Zusammenfassung * <br> * Abbildung 1 * <br> ----- | 1-10 | RECHERCHIERTE SACHGEBIETE (IPC) <br><br> B01F <br> B28C <br> B22C <br> G05D <br> G01N <br> B07B |
| A,D | DE 20 2004 015916 U1 (EASTEC GMBH EQUIPMENT AUTOMATI [DE]) 3. Februar 2005 (2005-02-03) <br> * Zusammenfassung * <br> * Abbildung 1 * <br> ----- | 1-10 | |

Der vorliegende Recherchenbericht wurde für alle Patentansprüche erstellt

| Recherchenort | Abschlußdatum der Recherche | Prüfer |
|---|---|---|
| Den Haag | 26. September 2017 | Krasenbrink, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 8628

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2017

| Im Recherchenbericht angeführtes Patentdokument | Datum der Veröffentlichung | Mitglied(er) der Patentfamilie | Datum der Veröffentlichung |
|---|---|---|---|
| NL 1000091 C2 | 08-10-1996 | KEINE | |
| JP S63166424 A | 09-07-1988 | JP H0455733 B2 | 04-09-1992 |
| | | JP S63166424 A | 09-07-1988 |
| EP 0319070 A1 | 07-06-1989 | AT 135279 T | 15-03-1996 |
| | | DE 3855107 D1 | 18-04-1996 |
| | | DE 3855107 T2 | 05-09-1996 |
| | | DE 3867816 D1 | 27-02-1992 |
| | | EP 0319070 A1 | 07-06-1989 |
| | | EP 0450738 A2 | 09-10-1991 |
| | | ES 2028264 T3 | 01-07-1992 |
| | | ES 2084760 T3 | 16-05-1996 |
| | | GR 3004208 T3 | 31-03-1993 |
| | | JP H01199660 A | 11-08-1989 |
| | | NL 8702774 A | 16-06-1989 |
| | | SG 64920 A1 | 25-05-1999 |
| | | US 5076702 A | 31-12-1991 |
| DE 10106323 A1 | 29-08-2002 | KEINE | |
| DE 202004015916 U1 | 03-02-2005 | DE 202004015916 U1 | 03-02-2005 |
| | | WO 2005038466 A1 | 28-04-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 10106323 A1
- DE 202004015916 U1
- DE 102012106132 A1